# EUROPÄISCHE PATENTSCHRIFT

(11) **EP 0 734 927 B1**
(45) Veröffentlichungstag und Bekanntmachung des Hinweises auf die Patenterteilung: **08.09.1999**
(21) Anmeldenummer: 96104248.8
(22) Anmeldetag: 18.03.1996
(51) Int. Cl.: B60T 8/36, F16D 65/21

(54) **Elektronisch steuerbare Bremsanlage für Landfahrzeuge und Verfahren zu deren Betrieb**
Electrically controllable brake system for land vehicles and procedure for its operation
Système de freinage contrôlable électriquement pour véhicules terrestres et procédé pour son opération

(30) Priorität: 30.03.1995 DE 19511811
(43) Veröffentlichungstag der Anmeldung: 02.10.1996
(73) Patentinhaber: LUCAS INDUSTRIES PUBLIC LIMITED COMPANY, Solihull, West Midlands B91 3TX (GB)
(72) Erfinder: Mohr, Kurt, 56283 Halsenbach/Ehr (DE); Seuser, Ulrich, Dr., 56566 Neuwied (DE)
(74) Vertreter: Schmidt, Steffen J., Dipl.-Ing.

(56) Entgegenhaltungen:
- DE-A- 3 545 800
- DE-A- 3 600 733
- US-A- 5 067 778

## Beschreibung

Die vorliegende Erfindung betrifft eine elektronisch steuerbare Bremsanlage für Landfahrzeuge mit einer Zylinder-Kolbenanordnung, mit der in ein Reibungselement, das mit einem Fahrzeugrad gekoppelt ist, durch Beaufschlagen einer Hydraulikkammer der Zylinder-Kolbenanordnung mit Hydraulikfluid Reibungskräfte einleitbar sind.

Diese Bremsanlage soll so weiter entwickelt werden, daß die Bremskraftverstärkung, also die vom Fahrer in das Bremspedal eingeleitete Kraft elektromechanisch erfolgt, wobei die Kraft direkt bei der jeweiligen Radbremse verstärkt und über ein Hydraulikfluid auf den Bremskolben übertragen werden soll.

Üblicherweise ist bei einem Kraftfahrzeug jedes Fahrzeugrad mit einer Bremseinheit versehen, die aus einer Scheiben- oder Trommelbremse sowie einem Bremskolben gebildet ist. Der Bremskolben wirkt hydraulisch oder pneumatisch auf die Scheiben- oder Trommelbremse. Entweder ist jedem Bremskolben ein einzelner Verstärker zugeordnet oder alle Bremskolben werden von einem gemeinsamen Bremskraftverstärker gesteuert. Über eine elektronische Steuerung wird das Verhalten eines oder mehrerer Fahrzeugräder in Bezug auf dessen Verzögerung bzw. Beschleunigung überwacht. Darüber hinaus werden weitere Parameter des Bremsvorganges, z.B. der Bremspedalbetätigungsweg, die Bremspedalbetätigungsgeschwindigkeit, die Bremspedalbetätigungskraft erfaßt und ausgewertet. Die elektronische Steuerung bestimmt aus diesen (und ggf. weiteren) Daten eine notwendige Bremskraftunterstützung und aktiviert den Bremskraftverstärker der jeweiligen Bremse oder moduliert die für alle Bremseinheiten zur Verfügung stehende Bremskraft des gemeinsamen Bremskraftverstärkers, worauf der durch die Pedalbetätigungskraft allein aufgebrachte hydraulische Bremszylinderdruck entsprechend verstärkt wird.

Alle derartigen bekannten Bremsanlagen haben aus Sicherheitsgründen neben einer elektronischen Betätigung eine direkte hydraulische Verbindung des pedalbetätigten Hauptbremszylinders zu den Bremskolben, um bei einem Ausfall der Elektronik nach wie vor die Bremse betätigen zu können.

Aus der DE 35 45 800 A1 ist eine Steuervorrichtung für Fahrzeugbremsen bekannt, bei der in dem Bremssattel eines jeden Rades eines Kraftfahrzeuges ein Radzylinder und ein Bremszylinder angeordnet sind. Eine piezoelektrische Betätigungsvorrichtung ist in dem Bremssattel derart angeordnet, daß sie mit dem Radzylinder in Verbindung steht. Wenn die piezoelektrische Betätigungsvorrichtung unter elektrische Spannung gesetzt wird, verschiebt sich ein Stempel in einer Buchse und verändert das Volumen des Hydraulikfluids in dem Radzylinder. Von einem Hauptzylinder wird Bremsflüssigkeit über einen Fluidkanal in dem Bremssattel dem Radzylinder zugeführt, wobei dieser Fluidkanal mit Hilfe eines Steuerventils geöffnet und geschlossen werden kann. Bei hohem Druck in dem Bremszylinder dehnt sich die piezoelektrische Betätigungsvorrichtung aus und das Steuerventil schließt. Anschließend wird die elektrische Spannung an der piezoelektrischen Betätigungsvorrichtung gesenkt, wodurch der Druck in dem Radzylinder gesenkt wird. Der in der Buchse geführte Stempel muß fluiddicht und reibungsarm gelagert sein, um eine verzögerungsarme Betätigung des Bremskolbens zu ermöglichen. Dies verursacht hohe Kosten bei der Herstellung und bedeutet eine aufwendige Montage.

Aus der DE 36 00 733 A1 ist eine ähnliche Steuervorrichtung für Fahrzeugbremsen bekannt, bei der innerhalb des Radzylinders ein Bremskolben angeordnet ist, in dessen Innerem eine piezoelektrische Kolbenvorrichtung vorgesehen ist. Hierbei wird der Bremskolben (zusammen mit der piezoelektrischen Kolbenvorrichtung) durch Hydraulikfluid durch einen Hauptbremszylinder zu einer Zustellbewegung der Bremse veranlaßt. Dabei wandert der Bremskolben zusammen mit der piezoelektrischen Kolbenvorrichtung unter der Einwirkung des Hydraulikfluids in dem Radzylinder. Zusätzlich zu der hydraulisch verursachten Zustellbewegung kann die piezoelektrische Kolbenvorrichtung aktiviert werden, die direkt auf einen Bremsbelag wirkt. Auch bei dieser Anordnung ist die Führung und Lagerung der piezoelektrischen Kolbenvorrichtung in dem Bremskolben hinsichtlich der fluiddichten Abdichtung und der verschleißarmen und trägheitsarmen Führung und Lagerung kritisch.

Der Erfindung liegt das Problem zugrunde, die vorstehend beschriebenen Anordnungen in ihrer Lebensdauer und Sicherheit zu verbessern und für eine kostengünstige und effiziente Serienfertigung geeignet zu konzipieren.

Dies wird gemäß der Erfindung dadurch erreicht, daß in die Hydraulikkammer der Zylinder-Kolbenanordnung ein elektrisch betätigbares Verdrängungselement ragt, das in Abhängigkeit von Steuersignalen einer elektronischen Steuerung zur Erhöhung oder Verringerung des Druckes auf in der Hydraulikkammer befindlichen Hydraulikfluids betätigbar ist, um bei einem Bremsvorgang die in das Reibungselement eingeleiteten Reibungskräfte zu erhöhen bzw. zu verringern.

Das Reibungselement kann sowohl die Scheibe eine Scheibenbremse als auch die Trommel einer Trommelbremse sein.

Bei einer bevorzugten Ausführungsform der Erfindung ist das Verdrängungselement durch einen mit den Steuersignalen der elektronischen Steuerung ansteuerbaren Aktuator betätigbar. Vorzugsweise ist dieser Aktuator durch einen Linearmotor in Form einer piezoelektrischen Stelleinheit zur Erhöhung oder Verringerung des Druckes auf in der Hydraulikkammer befindlichen Hydraulikfluids gebildet. Es sind auch andere Ausführungsformen des Aktuators möglich. Wesentliche Gesichtspunkte bei der Auswahl des Aktuators sind ein verzögerungsarmes Ansprechverhalten, hohe Betriebssicherheit, hohe Stellkräfte und ein relativ geringer Stromverbrauch. Der geringe Stellweg, wie er bei einer piezoelektrischen Stelleinheit erreichbar ist, spielt deshalb keine negative Rolle, weil im Rahmen einer hydraulischen Übersetzung dies ohnehin auf die tatsächlichen Gegebenheiten anzupassen ist.

Das Verdrängungselement ist bei einer derzeit bevorzugten Ausführungsform durch eine vorzugsweise metallische Membran gebildet, die in Abhängigkeit von den Steuersignalen durch den Aktuator verformbar und/oder verschiebbar ist und dabei den Druck auf zumindest einen Teil von in der Hydraulikkammer befindlichem Hydraulikfluid erhöht oder verringert. Diese (metallische) Membran kann mit dem Aktuator starr gekoppelt sein oder der Aktuator bzw. ein mit diesem gekoppeltes Betätigungselement kann erst einen Leerweg überwinden müssen, bevor die Membran betätigt wird. Je nach der Form und dem Steifigkeitsprofil der Membran kann diese verformt und/ oder verschoben werden, wenn der Aktuator die Membran betätigt.

Das Verdrängungselement ist bei einer weiteren derzeit bevorzugten Ausführungsform durch einen vorzugsweise metallischen Faltenbalg gebildet, der in Abhängigkeit von den Steuersignalen durch den Aktuator verformbar und/ oder verschiebbar ist und dabei den Druck auf in der Hydraulikkammer befindliches Hydraulikfluid erhöht oder verringert. Dieser Faltenbalg erlaubt ebenso wie die Membran eine nennenswerte Volumen- bzw. entsprechende Druckänderung, die durch einen kleinen Hub des Aktuators in das Hydraulikfluid eingeleitet werden kann.

Je nach den Flächen bzw. Volumenverhältnissen zwischen dem Faltenbalg bzw. der Membran und der Hydraulikkammer kann die Bremseinrichtung sehr direkt und verzögerungsarm betätigt werden.

Um eine Rückwirkung auf den Bremszylinder bzw. das diesen betätigende Bremspedal zu vermeiden, kann vorteilhaft eine Ventilanordnung vorgesehen sein, die während einer Betätigung des Verdrängungselementes im Sinne einer Erhöhung des Drucks in dem Hydraulikfluid ein Abfließen des Hydraulikfluids aus zumindest einem Bereich der Hydraulikkammer verhindert. Die Druckerhöhung bewirkt damit (ausschließlich) eine Erhöhung der in das Reibungselement eingeleiteten Reibungskräfte und drängt nicht das Bremspedal gegen den Fuß des Fahrers.

Vorzugsweise ist die Hydraulikkammer durch das Verdrängungselement in einen ersten und einen zweiten Bereich getrennt, wobei die beiden Bereiche durch die Ventilanordnung miteinander verbunden sind. Einer der beiden Bereich wird bei einem Schließen der Ventilanordnung abgeschlossen, wobei das Schließen der Ventilanordnung vorzugsweise bei einer Betätigung des Aktuators im Sinne einer Erhöhung des Drucks in dem Hydraulikfluid durch den Aktuator bewirkt wird. Dies erlaubt eine besonders einfache Festlegung der Eigenschaften der Bremsanlage, da so die zu bewegenden Volumina festgelegt werden können. Damit kann auch der für eine bestimmte Reibungskraft erforderliche Stellweg einfach definiert werden.

Wenn das Hydraulikfluid bei einem Bremsvorgang von einem durch ein Bremspedal betätigbaren Bremszylinder in den zweiten Bereich der Hydraulikkammer gefördert wird, von dort in den ersten Bereich gelangt und auf das Reibungselement wirkt, wird sichergestellt, daß zu jeder Zeit ausreichend Hydraulikfluid in der Bremseinheit zur Verfügung steht. Außerdem wird eine besonders hohe Sicherheit bei einem relativ geringen konstruktiven Aufwand erreicht, da auch beim Ausfall des Aktuator das für Verdrängungselement ein rein mechanisches Betätigen der Bremse noch möglich ist.

Vorzugsweise ist das Schließen der Ventilanordnung beendet, wenn der Aktuator das Verdrängungselement im Sinne einer Erhöhung des Drucks in dem Hydraulikfluid verformt und/ oder verschiebt. Damit wird sichergestellt, daß kein Hydraulikfluid durch die Ventilanordnung zurückströmt. Vielmehr steht die gesamte Druckänderung/Volumenveränderung für die Erhöhung der Reibungskraft zur Verfügung.

Bei einer besonders bevorzugten Ausführungsform der Erfindung weist die Membran eine konvexe Wölbung auf, die entlang ihres Umfangs in dem Zylinder eingespannt ist und mit ihrer konvexen Wölbung einem Betätigungselement des Aktuators zugewandt ist.

Damit kann eine sehr feinfühlige Einstellung der Bremscharakteristik über eine entsprechende Wahl der Festigkeit, der Verformbarkeit und der Gestalt erreicht werden.

Eine besonders einfache Ausführungsform der Erfindung sieht vor, daß das Verdrängungselement in seinem Zentrum eine Öffnung aufweist, die zusammen mit einem mit dem Aktuator verbundenen Schließglied die Ventilanordnung bildet, wobei das Schließglied so dimensioniert und zu der Öffnung angeordnet ist, daß es in der unbetätigten Stellung des Aktuators das Verdrängungselement nicht berührt und die Öffnung freigibt, und in der betätigten Stellung des Aktuators die Öffnung verschließt und das Verdrängungselement im Sinne einer Erhöhung des Drucks in dem Hydraulikfluid in dem abgeschlossenen Bereich verformt und/ oder verschiebt. Damit haben einzelne Bauteile mehrere Funktionen. Dies ist insbesondere für eine einfache Montage, für die Fehleranfälligkeit und für die Wartung vorteilhaft.

Bei einer anderen Ausführungsform ist die Ventilanordnung außerhalb der Hydraulikkammer angeordnet.

Die Erfindung betrifft auch ein Verfahren zum Betrieb einer elektronisch steuerbaren Bremsanlage für Landfahrzeuge, wobei für einen Bremsvorgang eine Hydraulikkammer einer Zylinder-Kolbenanordnung mit Hydraulikfluid von einem durch ein Bremspedal betätigten Bremszylinder derart beaufschlagt wird, daß in ein Reibungselement, das mit einem Fahrzeugrad gekoppelt ist, Reibungskräfte eingeleitet werden, mittels einer elektronischen Steuereinrichtung und mit dieser verbundenen Sensoren Parameter des Bremsvorganges erfaßt werden, aus den Parametern des momentanen Bremsvorganges für den Bremsvorgang optimale Reibungskräfte bestimmt werden, die als optimal bestimmten Reibungskräfte mit den in das Reibungselement eingeleiteten Reibungskräften verglichen werden, und Steuersignale für einen Aktuator erzeugt werden, wenn sich aus den erfaßten Parametern ergibt, daß die in das Reibungselement eingeleiteten Reibungskräfte nicht mit den als optimal bestimmten Reibungskräften übereinstimmen, wobei der Aktuator auf ein Verdrängungselement wirkt, das zur Erhöhung oder Verringerung des Druckes auf in der Hydraulikkammer befindliches Hydraulikfluid bewegbar ist, um die in das Reibungselement eingeleiteten Reibungskräfte so zu erhöhen bzw. zu verringern, daß die als optimal bestimmten Reibungskräfte in das Reibungselement eingeleitet werden.

Diese Betriebsweise hat sich als besonders vorteilhaft erwiesen, da sie sowohl eine elektronisch nicht unterstützte Betriebsweise erlaubt, als auch eine Modulation des Bremsdrucks in positiver und/oder negativer Richtung, so daß ein Einsatz in Cruise-Control-Regelungen, ABS-, ASR-, und Fahrdynamikregelungen möglich ist.

Vorzugsweise beinhalten die erfaßten Parameter eine oder mehrere der Größen: In das Reibungselement eingeleitete Reibungskräfte, Bremspedalbetätigungskraft, Bremspedalbetätigungsweg, Bremspedalbetätigungsgeschwindigkeit, Fahrzeugradgeschwindigkeit, Fahrzeugradverzögerung, und Druck in der Hydraulikkammer.

Insbesondere für ABS- oder ASR-Regelungen können die als optimal bestimmten Reibungskräfte für einen Bremsvorgang durch eine Folge unterschiedlich großer Reibungskraftwerte gleicher oder unterschiedlicher Zeitdauer gebildet sein.

Weitere Eigenschaften, Merkmale und Vorteile der Erfindung werden auch aus der nachstehenden Beschreibung dreier erfindungsgemäßer Ausführungsformen deutlich.
- Fig. 1: zeigt eine elektronisch gesteuerte Bremsanlage, wobei nur eine Bremseinheit in einer schematischen seitlichen Schnittansicht veranschaulicht ist,
- Fig. 1a: zeigt eine vergrößerte schematische seitliche Detailschnittansicht eines Verdrängungselementes der Bremseinheit nach Fig. 1,
- Fig. 2: zeigt eine erste Ausführungsform einer elektronisch gesteuerten Bremsanlage, wobei nur eine Bremseinheit in einer schematischen seitlichen Schnittansicht veranschaulicht ist,
- Fig. 2a: zeigt eine vergrößerte schematische seitliche Detailschnittansicht eines Verdrängungselementes der Bremseinheit nach Fig. 2,
- Fig. 3: zeigt eine zweite Ausführungsform einer elektronisch gesteuerten Bremsanlage, wobei nur eine Bremseinheit in einer schematischen seitlichen Schnittansicht veranschaulicht ist, und
- Fig. 3a: zeigt eine vergrößerte schematische seitliche Detailschnittansicht eines Verdrängungselementes der Bremseinheit nach Fig. 3.

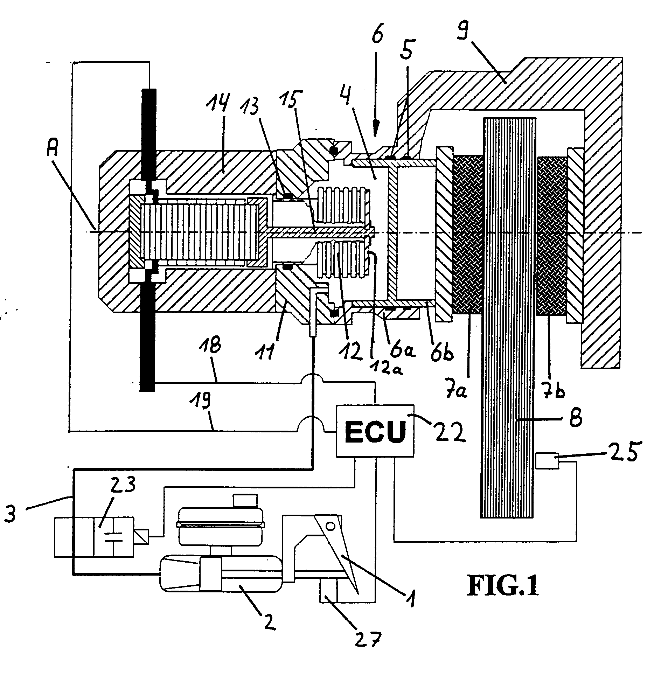

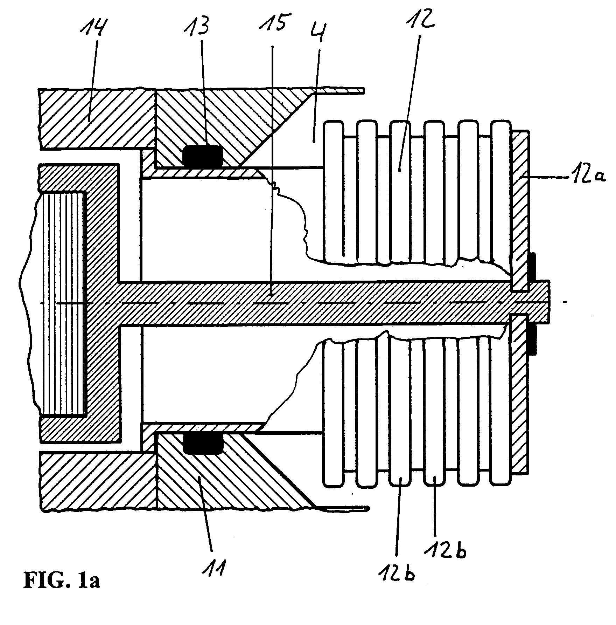

Die Fig. 1, 1a zeigen ein erstes Beispiel einer Bremsanlage, bei der ein durch ein Bremspedal 1 betätigbarer Hauptbremszylinder 2 über eine Hydraulik-Leitung 3 mit einer Hydraulikkammer 4 einer Zylinderkolbenanordnung 6 verbunden ist. Die Zylinderkolbenanordnung 6 ist durch einen Bremszylinder 6a gebildet, in dem axial gleitend und durch eine umlaufende Dichtung 5 fluiddicht abgedichtet ein Bremskolben 6b aufgenommen ist. Der Bremskolben 6b trägt an seinem freien Ende einen Bremsbelag 7a, der zusammen mit einem zweiten Bremsbelag 7b auf zwei gegenüberliegende Flächen einer als Reibungselement ausgebildeten Bremsscheibe 8 einwirkt. Eine Radbremszange 9 ist mit dem Bremszylinder 6a einstückig verbunden, übergreift die Bremsscheibe 8 und haltert den zweiten Bremsbelag 7b.

Durch den von der Bremsscheibe 8 abgewandten Boden 11 des Bremszylinders 6a reicht ein als Faltenbalg ausgebildetes Verdrängungselement 12, das eine im wesentlichen zylindrische Gestalt hat und an seinem in die Hydraulikkammer 4 ragenden Ende 12a extrahierbar und kontrahierbar ist. Das Verdrängungselement 12 ist in dem Boden 11 des Bremszylinders 12a starr und fluiddicht (durch einen umlaufenden Dichtring 13) aufgenommen. An der Außenseite des Bodens 11 des Bremskolbens 6a ist ein Aktuator 14 angeflanscht, der als Linearmotor in Form einer piezoelektrischen Stelleinheit ausgebildet ist. Der Aufbau und die Funktionsweise einer derartigen piezoelektrischen Stelleinheit ist beispielsweise aus der DE 36 00 7331 A1 oder der DE 35 45 800 A1 an sich bekannt.

An dem zum Boden 11 des Bremskolbens 6a hin gewandten Ende des Aktuators 14 weist die piezoelektrische Stelleinheit ein Betätigungselement 15 auf, das durch den Boden 11 hindurch in das Innere des Verdrängungselementes 12 ragt und mit diesem an dessen freiem Ende 12a starr verbunden ist. Wenn der Aktuator 14 über die beiden Leitungen 18 und 19 mit Steuersignalen aus einer elektronischen Steuereinrichtung 22 beaufschlagt wird, verschiebt sich das Betätigungselement 15 längs der gemeinsamen Mittelachse A des Aktuators 14 und der Zylinderkolbenanordnung 6 und bewirkt eine Expansion oder Kontraktion des Verdrängungselementes 12 in der Hydraulikkammer 4.

Um zu verhindern, daß in der Hydraulikkammer 4 befindliches Hydraulikfluid durch die Hydraulikleitung 3 zurück in den Hauptbremszylinder 2 gedrängt wird, wenn das Verdrängungselement 12 expandiert, ist in der Hydraulikleitung 3 ein Zweiwege-Magnetventil 23 angeordnet, das von der elektronischen Steuereinheit 22 gesteuert die Hydraulikleitung 3 gegenüber dem Hauptbremszylinder 2 sperren kann. Die elektronische Steuereinrichtung 22 ist mit einem Sensor 25 zum Erfassen der Fahrzeugradgeschwindigkeit bzw. der Fahrzeugradverzögerung (an der Bremsscheibe 8) und mit einem Sensor 27 zum Erfassen der Bremspedalbetätigungskraft, dem Bremspedalbetätigungsweg bzw. der Bremspedalbetätigungsgeschwindigkeit verbunden.

Für eine Bremsung betätigt der Fahrer das Bremspedal 1 und verschiebt mit seiner Fußkraft den Kolben des Hauptbremszylinders 2, wodurch das verdrängte Hydraulikfluid über die Hydraulikleitung 3 durch das geöffnete Zweiwege-Magnetventil 23 in die Hydraulikkammer 4 der Zylinderkolbenanordnung 6 gedrückt wird. Der sich aufbauende Hydraulikdruck in der Hydraulikkammer 4 verschiebt den Bremskolben 6b und drückt den Bremsbelag 7a gegen die Bremsscheibe 8. Über die Bremszange 9 wird bei dieser Bewegung auch der andere Bremsbelag 7b gegen die gegenüberliegende Seite der Bremsscheibe 8 gedrückt. Die dabei in die Bremsscheibe 8 eingeleiteten Reibungskräfte Fₐₖₜ bewirken eine bestimmte, durch den Sensor 25 erfaßbare Fahrzeugradverzögerung. Aus den gleichzeitig fortlaufend gemessenen Werten der Bremspedalbetätigungskraft, und/oder der Bremspedalbetätigungsgeschwindigkeit ermittelt die elektronische Steuereinrichtung 22 eine vom Fahrer gewollte Höhe der Brems-Reibungskraft, die in entsprechende Steuersignale für den Aktuator 14 umgesetzt wird.

Der Aktuator 14 verschiebt daraufhin das Betätigungselement 15 entlang der Achse A in Richtung auf die Hydraulikkammer 4, so daß der Verdrängungselementes 12 auseinandergeschoben wird. Dies bedeutet eine Volumenerhöhung des Verdrängungselementes 12 und somit eine Erhöhung des Drucks in der Hydraulik 4. Demzufolge wird der Bremskolben 6b weiter auf die Bremsscheibe 8 hin gedrängt. Während der Beaufschlagung des Aktuators 14 mit Steuersignalen im Sinne einer Druckerhöhung wird das Zweiwege-Magnetventil 23 durch die elektronische Steuereinrichtung 22 gesperrt. Die Ermittlung der vom Fahrer gewünschten Brems-Reibungskraft in der elektronischen Steuereinrichtung 22 kann entweder über Kennfelder oder jeweils durch fortlaufend durchgeführte Berechnungen erfolgen. Da das Verdrängungselement 12 einen relativ großen Anteil der Querschnittsfläche der Hydraulikkammer 4 einnimmt, können relativ kleine und schnell ausführbare Stellhübe eine hohe Drucksteigerungs- bzw. Druckreduzierrate in der Hydraulikkammer 4 bewirken, was wiederum zu sehr schnellen Reibungskraftänderungen an der Bremsscheibe 8 führt.

Falls die vom Fahrer gewünschte Brems-Reibungskraft dazu führen würde, daß eine zu starke Fahrzeugradverzögerung aufträte, die das Fahrzeugrad nicht mehr auf die Fahrbahn übertragen kann, d.h., daß das Fahrzeugrad blockiert, ist es notwendig, den in der Hydraulikkammer 4 auftretenden Druck entweder auf einen ungefährlichen Wert zu begrenzen. Wenn das Fahrzeugrad aufgrund einer Änderung der Fahrbahnbeschaffenheit plötzlich blockiert, ist es in entsprechender Weise notwendig, den vorhandenen Druck zu reduzieren.

Dazu wird in der elektronischen Steuereinrichtung 22 aus den durch die Sensoren 25 bis 27 erfaßten Parametern eine optimale Bremskraft Fₒₚₜ ermittelt und in entsprechende Steuersignale an dem Aktuator 14 umgesetzt. Da das Betätigungselement 15 des Aktuators 14 mit dem freien Ende des Faltenbalges 12 starr verbunden ist, kann der Aktuator 14 sowohl die bereits beschriebene Druckerhöhung in der Hydraulikkammer 4 bewirken, als auch durch axiale Bewegung in der entgegengesetzten Richtung gezielte Druckverringerungen hervorrufen. Bei einer Bewegung des Betätigungselementes 15 im Sinne einer Druckverringerung in der Hydraulikkammer 4 kann durch die elektronische Steuereinrichtung 22 auch das Zweiwege-Magnetventil 23 geöffnet werden, so daß das Hydraulikfluid durch die Hydraulikleitung 3 in den Hauptbremszylinder 2 bzw. dessen Ausgleichsgefäß fließen kann. Bei einer Bewegung des Betätigungselementes 15 im Sinne einer Druckverringerung in der Hydraulikkammer 4 werden die Falten 12b (siehe Fig. 1a) des Faltenbalges 12 zusammengezogen, so daß sich das Volumen des Verdrängungselementes 12 und damit der Druck in der Hydraulikkammer 4 entsprechend verringert.

Bei dieser Bremsanlage ist es möglich, mit einer Bremspedalbetätigung soviel Hydraulikfluid aus dem Hauptbremszylinder 2 in die Hydraulikkammer 4 zu pressen, daß der Bremskolben 6b das Bremslüftspiel überwindet und die beiden Bremsbeläge 7a, 7b an der Bremsscheibe 8 zur Anlage (und ggf. zum Reibungseingriff) kommen. Die Beaufschlagung der Bremsbeläge 7a, 7b mit zusätzlicher Anpreßkraft an der Bremsscheibe 8, um eine Reibungskraft hervorzurufen, erfolgt dann durch von der elektronischen Steuereinrichtung 22 hervorgerufene Aktivierung des Aktivators 14, der eine Expansion oder Kontraktion des Verdrängungselementes 12 in dem Hydraulikfluid in der Hydraulikkammer 4 hervorruft.

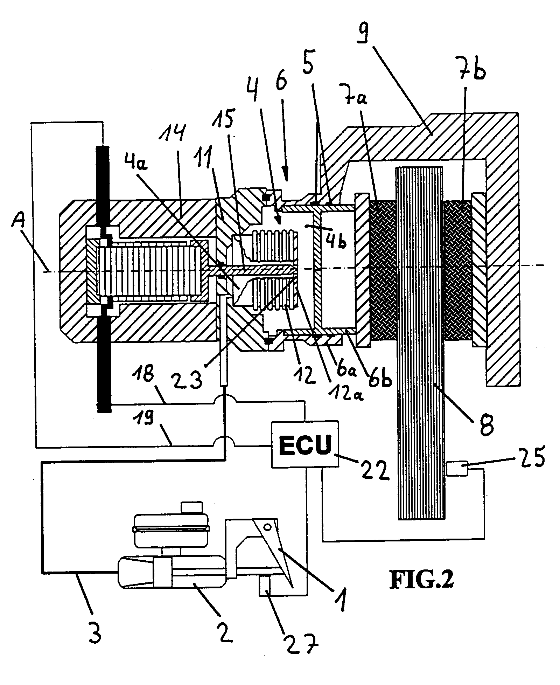

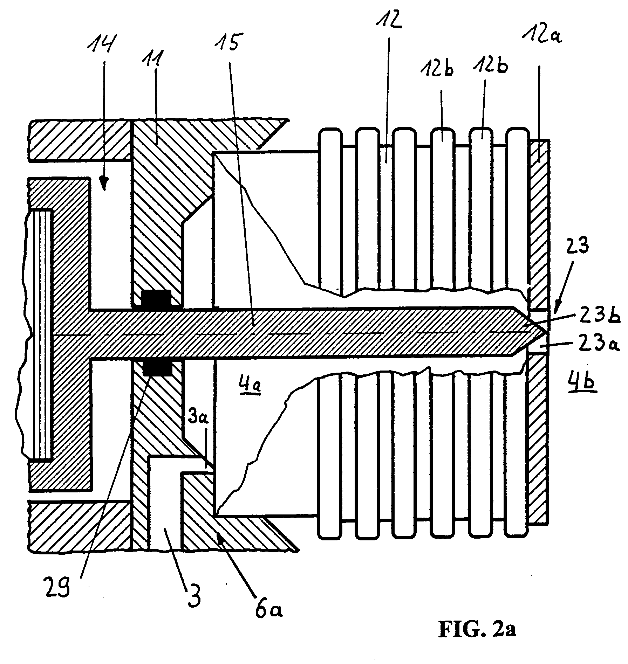

Die Fig. 2, 2a zeigen ein erstes Ausführungsbeispiel einer erfindungsgemäßen Bremsanlage. Gleiche bzw. gleichwirkende Teile wie in den Fig. 1, 1a haben gleiche Bezugszeichen und sind nachstehend nicht nochmals erläutert. Der Hauptunterschied gegenüber dem Beispiel gemäß den Fig. 1, 1a besteht darin, daß das Zweiwege-Magnetventil 23 aus Fig. 1 in das Innere der Hydraulikkammer 4 gelegt ist. Außerdem ist die Hydraulikkammer 4 durch das Verdrängungselement 12 in einen ersten und einen zweiten Bereich 4a, 4b getrennt. Die beiden Bereiche 4a, 4b sind durch die Ventilanordnung 23 miteinander verbunden. Wie insbesondere in Fig. 2a zu sehen ist, wird die Ventilanordnung 23 durch eine Öffnung 23a gebildet, die in einer das freie Ende 12a des Verdrängungselementes 12 bildenden Stirnplatte mittig vorgesehen ist. Diese Öffnung 23a fluchtet mit dem Betätigungs-element 15 des Aktuators 14. Das Betätigungselement 15 verjüngt sich an seinem der Öffnung 23a zugewandten Ende 23b konisch. Dieses konische Ende 23b bildet ein Schließglied für die Öffnung 23a und ist so dimensioniert und zu der Öffnung 23a angeordnet, daß es in der unbetätigten Stellung des Aktuators das Verdrängungselement nicht berührt und die Öffnung 23a freigibt, während es in der betätigten Stellung des Aktuators die Öffnung 23a verschließt und das Verdrängungselement in seine expandierte Stellung gedrängt ist.

Das zylindrische Verdrängungselement 12 ist an seinem dem Boden 11 der Hydraulikkammer 4 zugewandten Ende starr und fluiddicht mit der Wandung des Bremszylinders 6a verbunden. Dies ermöglicht das Weglassen der Dichtung 13 aus Fig. 1. Statt dessen ist ein Dichtungsring 29 in dem Boden 11 des Bremszylinders 6a vorgesehen, der die Durchtrittsöffnung für das Betätigungselement 15 des Aktuators 14 abdichtet. Die Hydraulikleitung 3 mündet in den Boden 11 des Bremszylinders 6a und hat eine Öffnung 3a, die das Innere des Verdrängungselementes 12 und damit den ersten Bereich 4a mit der Hydraulikleitung 3 verbindet.

Bei einer Ansteuerung des Aktuators 14 durch die elektronische Steuereinrichtung 22 wird die Ventilanordnung 23 (zwangsläufig) verschlossen, so daß der zweite Bereich 4b in der Hydraulikkammer 4 in dem Moment gegenüber der Verbindungsleitung 3 abgeschlossen ist, in dem das Verdrängungselement 12 durch das Betätigungselement 15 des Aktuators 14 expandiert wird. Eine eigene Ansteuerung der Ventilanordung 23 durch die elektronische Steuereinrichtung 22 entfällt damit. Sobald der Aktuator 14 das Betätigungselement 15 in seine unbetätigte Stellung zurückzieht, wird die Öffnung 23a von dem Schließelement 23b freigegeben und Hydraulikfluid kann aus dem zweiten Bereich 4b der Hydraulikkammer 4 durch die Verbindungsleitung 3 in Richtung Hauptbremszylinder 2 (bzw. dessen Ausgleichsgefäß) strömen, so daß sich der Druck auf die Bremsbeläge 7b verringert.

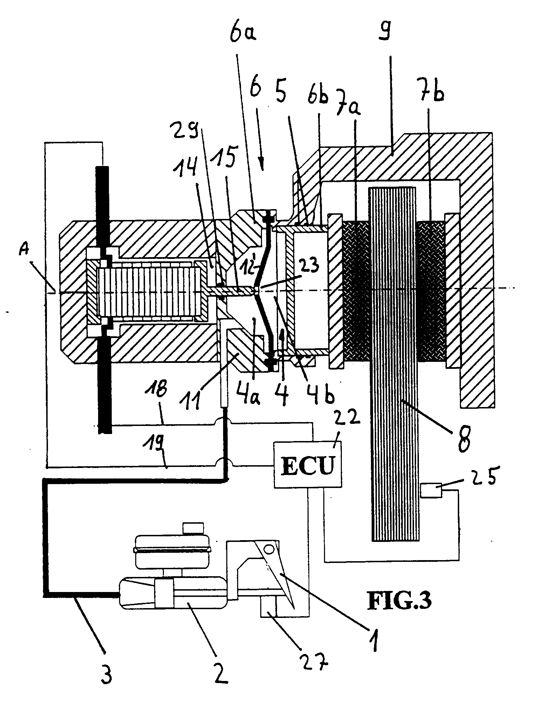

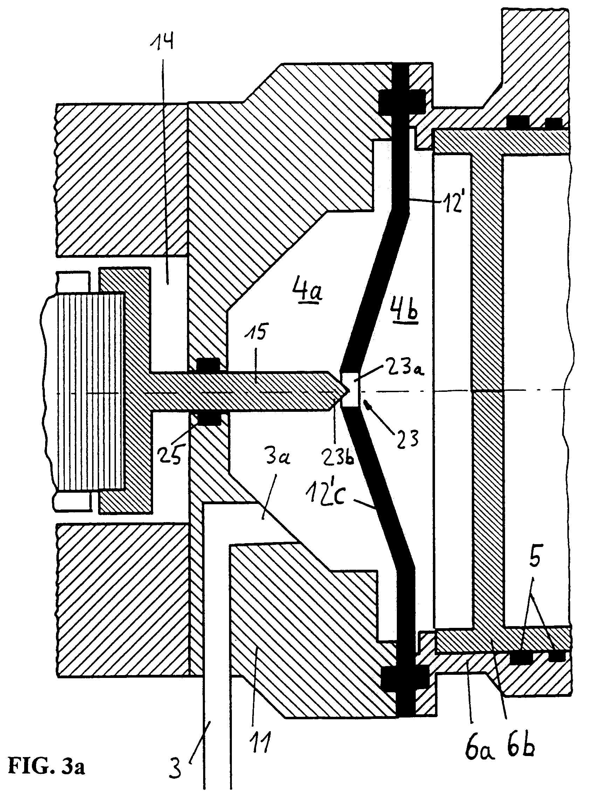

Im übrigen stimmen Funktion und Betriebsweise mit der des Beispiels nach den Fig. 1, 1a überein. In den Fig. 3, 3a ist eine weitere Ausführungsform der Erfindung veranschaulicht. Teile, die in ihrer Gestalt und/oder Funktion mit denen aus den Fig. 1, 1a bzw. 2, 2a übereinstimmen, sind mit den gleichen Bezugszeichen versehen und nicht nochmals im Detail erläutert.

Der wesentliche Unterschied zur Ausführungsform nach den Fig. 2, 2a besteht darin, daß anstelle des im wesentlichen zylindrischen Verdrängungselementes mit dem Faltenbalg 12 eine etwa tellerförmige Membran 12' die beiden Bereiche 4a, 4b in der Hydraulikkammer 4 voneinander trennt. Die Membran 12' hat eine zu dem Boden 11 des Bremszylinders 6 hin konvexe Wölbung 12'c. Wenn das Betätigungselement 15 des Aktuators 14 sich in Richtung auf die Membran 12' hin bewegt, verschließt das Schließelement 23b die Öffnung 23a in der Membran 12'. Bei einer weiteren Bewegung des Betätigungselementes 15 wird die Membran im Sinne einer Druckerhöhung in dem Bereich 4b der Hydraulikkammer 4 verformt bzw. verschoben.

Im übrigen entspricht die Funktion und Betriebsweise dieser Ausführungsform weitgehend der der Ausführungsform gemäß Fig. 2, 2a.

Es versteht sich für einen Fachmann von selbst, daß auch eine Kombination der Ausführungen der Fig. 1, 1a und 3, 3a möglich ist. Das heißt, an Stelle der in der Hydraulikkammer 4 angeordneten Ventilanordnung 23 in der Membran 12' kann das Betätigungselement 15 auch starr und fluiddicht mit der Membran 12' gekoppelt sein und das Zweiwege-Magnetventil 23 aus der Fig. 1 in die Hydraulikleitung 3 der Fig. 3 eingefügt sein.

Der Vorteil der separaten Ventilanordnung besteht darin, daß der Hub des Aktuators 14 vollständig in eine Druckerhöhung in dem Bereich 4b der Hydraulikkammer 4 umgesetzt wird und nicht erst zum Teil ein Ventilschließweg überwunden werden muß.

Es ist jedoch auch möglich den Betätigungshub des Betätigungselementes 15 dadurch zu erhöhen, daß der Aktuator 14 das Betätigungselement 15 nicht direkt betätigt, sondern daß dies über eine entsprechende Hydraulik- oder Hebelanordnung geschieht, wodurch der Hubweg des Betätigungselementes 15 vergrößerbar ist.

## Patentansprüche

1. Elektronisch steuerbare Bremsanlage für Landfahrzeuge, mit
- einer Zylinder-Kolbenanordnung (6), mit der in ein Reibungselement (8), das mit einem Fahrzeugrad gekoppelt ist, durch Beaufschlagen einer Hydraulikkammer (4) der Zylinder-Kolbenanordnung (6) mit Hydraulikfluid Reibungskräfte (Fₐₖₜ) einleitbar sind, wobei
- in die Hydraulikkammer (4) der Zylinder-Kolbenanordnung (6) ein elektrisch betätigbares Verdrängungselement (12) ragt, das in Abhängigkeit von Steuersignalen einer elektronischen Steuerung (22) zur Erhöhung oder Verringerung des Druckes auf in der Hydraulikkammer (4) befindlichen Hydraulikfluids betätigbar ist, um bei einem Bremsvorgang die in das Reibungselement (8) eingeleiteten Reibungskräfte (Fₐₖₜ) zu erhöhen bzw. zu verringern, und
- eine Ventilanordnung (23) vorgesehen ist, die während einer Betätigung des Verdrängungselementes (12) im Sinne einer Erhöhung des Drucks in dem Hydraulikfluid ein Abfließen des Hydraulikfluids aus zumindest einem Bereich (4b) der Hydraulikkammer (4) verhindert, dadurch gekennzeichnet, daß die Ventilanordnung (23) eine als Ventilsitz wirkende Öffnung (23a) aufweist, die in dem Verdrängungselement (12) ausgebildet ist.

2. Elektronisch steuerbare Bremsanlage für Landfahrzeuge nach dem vorhergehenden Anspruch, dadurch gekennzeichnet, daß
- das Verdrängungselement (12) durch einen mit den Steuersignalen der elektronischen Steuerung (22) ansteuerbaren Aktuator (14), vorzugsweise durch einen Linearmotor in Form einer piezoelektrischen Stelleinheit zur Erhöhung oder Verringerung des Druckes auf in der Hydraulikkammer (4) befindlichen Hydraulikfluids betätigbar ist.

3. Elektronisch steuerbare Bremsanlage für Landfahrzeuge nach Anspruch 2, dadurch gekennzeichnet, daß
- das Verdrängungselement durch eine vorzugsweise metallische Membran (12') gebildet ist, die in Abhängigkeit von den Steuersignalen durch den Aktuator (14) verformbar und/oder verschiebbar ist und dabei den Druck auf zumindest einen Teil von in der Hydraulikkammer (4) befindlichem Hydraulikfluid erhöht oder verringert.

4. Elektronisch steuerbare Bremsanlage für Landfahrzeuge nach Anspruch 2, dadurch gekennzeichnet, daß
- das Verdrängungselement durch einen vorzugsweise metallischen Faltenbalg (12) gebildet ist, der in Abhängigkeit von den Steuersignalen durch den Aktuator (14) verformbar und/oder verschiebbar ist und dabei den Druck auf in der Hydraulikkammer (4) befindliches Hydraulikfluid erhöht oder verringert.

5. Elektronisch steuerbare Bremsanlage für Landfahrzeuge nach Anspruch 1, dadurch gekennzeichnet, daß
- die Hydraulikkammer (4) durch das Verdrängungselement (12) in einen ersten und einen zweiten Bereich (4a, 4b) getrennt ist, wobei die beiden Bereiche (4a, 4b) durch die Ventilanordnung (23a, 23b) miteinander verbunden sind, und von denen ein Bereich (4b) bei einem Schließen der Ventilanordnung (23a, 23b) abgeschlossen wird, wobei das Schließen der Ventilanordnung (23a, 23b) vorzugsweise bei einer Betätigung des Aktuators (14) im Sinne einer Erhöhung des Drucks in dem Hydraulikfluid durch den Aktuator (14) bewirkt wird.

6. Elektronisch steuerbare Bremsanlage für Landfahrzeuge nach dem vorhergehenden Anspruch, dadurch gekennzeichnet, daß
- das Hydraulikfluid bei einem Bremsvorgang von einem durch ein Bremspedal (1) betätigbaren Haupt-Bremszylinder (2) in den zweiten Bereich (4a) der Hydraulikkammer (4) gefördert wird.

7. Elektronisch steuerbare Bremsanlage für Landfahrzeuge nach Anspruch 5, dadurch gekennzeichnet, daß
- das Schließen der Ventilanordnung (23a, 23b) beendet ist, wenn der Aktuator (14) das Verdrängungselement (12) im Sinne einer Erhöhung des Drucks in dem Hydraulikfluid verformt und/oder verschiebt.

8. Elektronisch steuerbare Bremsanlage für Landfahrzeuge nach Anspruch 3, dadurch gekennzeichnet, daß
- die Membran (12') eine konvexe Wölbung (12'c) aufweist, entlang ihres Umfangs in dem Zylinder (6a) eingespannt ist und mit ihrer konvexen Wölbung (12'c) einem Betätigungselement (15) des Aktuators (14) zugewandt ist.

9. Elektronisch steuerbare Bremsanlage für Landfahrzeuge nach einem der vorhergehenden Ansprüche, dadurch gekennzeichnet, daß
- das Verdrängungselement (12) eine Öffnung (23a) aufweist, die zusammen mit einem mit dem Aktuator (15) verbundenen Schließglied (23b) die Ventilanordnung (23) bildet, wobei das Schließglied (23b) so dimensioniert und zu der Öffnung (23a) angeordnet ist, daß es in der unbetätigten Stellung des Aktuators (14) das Verdrängungselement (12, 12') nicht berührt und die Öffnung (23a) freigibt, und in der betätigten Stellung des Aktuators (14) die Öffnung (23a) verschließt und das Verdrängungselement (12, 12') im Sinne einer Erhöhung des Drucks in dem Hydraulikfluid in dem abgeschlossenen Bereich (4b) der Hydraulikkammer (4) verformt und/oder verschiebt.

10. Verfahren zum Betrieb einer elektronisch steuerbaren Bremsanlage für Landfahrzeuge, wobei eine elektronisch steuerbare Bremsanlage nach einem oder mehreren der Ansprüche 1 bis 9 bereitgestellt wird, und wobei für einen Bremsvorgang
- die Hydraulikkammer (4) die Zylinder-Kolbenanordnung (6a, 6b) mit Hydraulikfluid von einem durch ein Bremspedal (1) betätigten Bremszylinder (2) derart beaufschlagt wird, daß in das Reibungselement (8), das mit einem Fahrzeugrad gekoppelt ist, Reibungskräfte (Fₐₖₜ) eingeleitet werden,
- mittels einer elektronischen Steuereinrichtung (22) und mit dieser verbundenen Sensoren (25, 27)
-- Parameter des Bremsvorganges erfaßt werden,
-- aus den Parametern des momentanen Bremsvorganges für den Bremsvorgang optimale Reibungskräfte (Fₒₚₜ) bestimmt werden,
-- die als optimal bestimmten Reibungskräfte (Fₒₚₜ) mit den in das Reibungselement (8) eingeleiteten Reibungskräften (Fₐₖₜ) verglichen werden, und
-- Steuersignale für einen Aktuator (14) erzeugt werden, wenn sich aus den erfaßten Parametern ergibt, daß die in das Reibungselement (8) eingeleiteten Reibungskräfte (Fₐₖₜ) nicht mit den als optimal bestimmten Reibungskräften (Fₒₚₜ) übereinstimmen, wobei
--- der Aktuator (14) auf ein Verdrängungselement (12) wirkt, das zur Erhöhung oder Verringerung des Druckes auf in der Hydraulikkammer (4) befindliches Hydraulikfluid bewegbar ist, um die in das Reibungselement (8) eingeleiteten Reibungskräfte (Fₐₖₜ)so zu erhöhen bzw. zu verringern, daß die als optimal bestimmten Reibungskräfte (Fₒₚₜ) in das Reibungselement (8) eingeleitet werden.

11. Verfahren zum Betrieb einer elektronisch steuerbaren Bremsanlage für Landfahrzeuge nach dem vorhergehenden Anspruch, dadurch gekennzeichnet, daß
- die erfaßten Parameter eine oder mehrere der Größen: in das Reibungselement (8) eingeleitete Reibungskräfte (Fₐₖₜ), Bremspedalbetätigungskraft, Bremspedalbetätigungsweg, Bremspedalbetätigungsgeschwindigkeit, Fahrzeugradgeschwindigkeit, Fahrzeugradverzögerung, Druck in der Hydraulikkammer, an den Aktuator anliegende Spannung und/oder durch den Aktuator (14) fließender Strom beinhalten.

12. Verfahren zum Betrieb einer elektronisch steuerbaren Bremsanlage für Landfahrzeuge nach dem vorhergehenden Anspruch, dadurch gekennzeichnet, daß
- die als optimal bestimmten Reibungskräfte (Fₒₚₜ) für einen Bremsvorgang durch eine Folge unterschiedlich großer Reibungskraftwerte gleicher oder unterschiedlicher Zeitdauer gebildet sind.

13. Verfahren zum Betrieb einer elektronisch steuerbaren Bremsanlage für Landfahrzeuge nach einem der vorhergehenden Ansprüche 10 bis 12, dadurch gekennzeichnet, daß
- eine zumindest einen Teil des in der Hydraulikkammer befindlichen Hydraulikfluids von einem Bremszylinder trennende/mit diesem verbindende Ventilanordnung (23) geschlossen wird, bevor der Aktuator (14) das Verdrängungselement (12) im Sinne einer Erhöhung des Drucks in dem Hydraulikfluid in dem abgeschlossenen Bereich (4b) verformt und/oder verschiebt.

## Claims

1. An electronically controllable braking system for ground vehicles, comprising
- a cylinder/piston arrangement (6) which is able to introduce friction forces (Fₐₖₜ) into a friction element (8) which is coupled with a vehicle wheel by subjecting a hydraulic chamber (4) of the cylinder/piston arrangement (6) with hydraulic fluid, in which
- an electrically actuatable displacement element (12) projects into the hydraulic chamber (4) of the cylinder/piston arrangement (6), which is actuatable as a function of control signals from an electronic controller (22) for increasing or decreasing the pressure acting on the hydraulic fluid in the hydraulic chamber (4) in order to increase or decrease, respectively, the friction forces (Fₐₖₜ) which, during a braking operation, are introduced into the friction element (8); and
- a valve arrangement (23) is provided which, during an actuation of the displacement element 12 for increasing the pressure of the hydraulic fluid, prevents draining of the hydraulic fluid from at least one region (4b) of the hydraulic chamber (4),
characterized in that the valve arrangement (23) includes an opening (23a) acting as a valve seat which is formed in the displacement element (12).

2. An electronically controllable braking system for ground vehicles according to the previous claim, characterized in that
- the displacement element (12) is actuatable by an actuator (14) which can be driven by the control signals from the electronic controller (22), preferably by a linear drive in the form of a piezoelectric positioning unit, for increasing or decreasing the pressure acting on the hydraulic fluid in the hydraulic chamber (4).

3. An electronically controllable braking system for ground vehicles according to Claim 2, characterized in that
- the displacement element is constituted by a preferably metallic diaphragm (12') which can be deformed and/or displaced by the actuator (14) as a function of the control signals, thereby increasing or decreasing the pressure acting on at least part of the hydraulic fluid in the hydraulic chamber (4).

4. An electronically controllable braking system for ground vehicles according to claim 2,
characterized in that
- the displacement element is constituted by a preferably metallic bellows (12) which can be deformed and/or displaced by the actuator (14) as a function of the control signals, thereby increasing or decreasing the pressure acting on the hydraulic fluid in the hydraulic chamber (4).

5. An electronically controllable braking system for ground vehicles according to Claim 1, characterized in that
- the hydraulic chamber (4) is divided by the displacement element (12) into a first and a second region (4a, 4b), with the two regions (4a, 4b) being connected by the valve arrangement (23a, 23b), and one region (4b) of which is closed upon closing of the valve arrangement (23a, 23b), with the closing of the valve arrangement (23a, 23b) being preferably effected upon an actuation of the actuator (14) for increasing the pressure in the hydraulic fluid which is applied by the actuator (14).

6. An electronically controllable braking system for ground vehicles according to the previous claim, characterized in that
- during a braking operation the hydraulic fluid is supplied from a master cylinder (2) which can be actuated by a brake pedal (1) into the second region (4a) of the hydraulic chamber (4).

7. An electronically controllable braking system for ground vehicles according to Claim 5, characterized in that
- the closing operation of the valve arrangement (23a, 23b) is completed when the actuator (14) deforms and/or displaces the displacement element (12) in order to achieve a pressure increase in the hydraulic fluid.

8. An electronically controllable braking system for ground vehicles according to claim 3,
characterized in that
- the diaphragm (12') comprises a convex bulge (12'c), is clamped in the cylinder (6a) along its circumference and its convex bulge (12'c) faces an actuation element (15) of the actuator (14).

9. An electronically controllable braking system for ground vehicles according to one of the previous claims, characterized in that
- the displacement element (12) has an opening (23a) which together with a closing member (23b) connected with the actuator (15) constitutes the valve arrangement (23), with the closing member (23b) being dimensioned and arranged relative to the opening (23a) in such a way that it does not contact the displacement element (12, 12') in the non-actuated position of the actuator (14) and clears the opening (23a), and closes the opening (23a) in the actuated position of the actuator (14), and deforms and/or displaces the displacement element (12, 12') to achieve a pressure increase in the closed region (4b) of the hydraulic chamber (4).

10. A method for operating an electronically controllable braking system for ground vehicles, wherein an electronically controllable braking system according to one or several of claims 1 to 9 is provided and wherein for a braking operation
- the hydraulic chamber (4) subjects the cylinder (piston arrangement (6a, 6b) to hydraulic fluid from a master cylinder (2) which can be actuated by a brake pedal (1) in such a manner that friction forces (F_{act}) are introduced into the friction element (8) which is coupled with a vehicle wheel,
- by means of an electronic controller (22) and sensors (25, 27) coupled with same
-- parameters of the braking operation are sensed;
-- optimum friction forces (Fₒₚₜ) are determined on the basis of the parameters of the current braking operation;
-- the friction forces (Fₒₚₜ) determined to be optimum are comparted with the friction forces (Fₐₖₜ) introduced into the friction element (8); and
-- control signals for an actuator (14) are generated if the sensed parameters indicate that the friction forces (Fₐₖₜ) introduced into the friction element (8) are not in accordance with the friction forces (Fₒₚₜ) determined to be optimum; wherein
--- the actuator (14) acts upon a displacement element (12) which is movable for increasing or decreasing the pressure of the hydraulic fluid in the hydraulic chamber (4) in order to increase or decrease, respectively, the friction forces (Fₐₖₜ) introduced into the friction element (8) in such a manner that the friction forces (Fₒₚₜ) determined to be optimum are introduced into the friction element (8).

11. A method for operating an electronically controllable braking system for ground vehicles according to the previous claim, characterized in that
- the sensed paramaters include one or several of the following values: friction forces (Fₐₖₜ) introduced into the friction element (8), brake pedal actuation force, brake pedal actuation travel, vehicle wheel speed, vehicle wheel deceleration, pressure in the hydraulic chamber, voltage applied to the actuator (14) and/or current flowing through the actuator (14).

12. A method for operating an electronically controllable braking system for ground vehicles according to the previous claim, characterized in that
- the friction forces (Fₒₚₜ) determined to be optimum for a braking operation are constituted by a sequence of different friction force values of identical or different duration.

13. A method for operating an electronically controllable braking system for ground vehicles according to one of previous claims 10 - 12, characterized in that
- a valve arrangement (23) separating/connecting at least part of the hydraulic fluid in the hydraulic chamber from/with a brake cylinder is closed before the actuator (14) deforms and/or displaces the displacement element (12) to achieve a pressure increase in the hydraulic fluid in the closed region (4b).

## Revendications

1. Système de freinage pouvant être commandé électroniquement pour des véhicules terrestres, comprenant
- un dispositif à cylindre et piston (6) avec lequel on peut introduire des forces de frottement (Fₐₖₜ) dans un élément de frottement (8) qui est accouplé à une roue de véhicule, en alimentant une chambre hydraulique (4) du dispositif à cylindre et piston (6) avec du fluide hydraulique, dans lequel
- un élément de déplacement (12) pouvant être actionné électriquement pénètre dans la chambre hydraulique (4) du dispositif à cylindre et piston (6), qui peut être actionné en fonction de signaux de commande d'un système de réglage automatique (22) électronique pour augmenter ou diminuer la pression du fluide qui se trouve dans la chambre hydraulique (4), pour augmenter respectivement diminuer, lors d'un processus de freinage, les forces de frottement (Fₐₖₜ) introduites dans l'élément de frottement (8), et
- il y a un dispositif de vanne (23) qui empêche, pendant un actionnement de l'élément de déplacement (12) dans le sens d'une augmentation de la pression dans le fluide hydraulique, un écoulement du fluide hydraulique hors d'au moins une zone (4b) de la chambre hydraulique (4),
caractérisé en ce que le dispositif de vanne (23) présente une ouverture (23a) faisant office de siège de soupape qui est formée dans l'élément de déplacement (12).

2. Système de freinage pouvant être commandé électroniquement pour des véhicules terrestres selon la revendication précédente, caractérisé en ce que
- l'élément de déplacement (12) peut être actionné au moyen d'un actionneur (14) pouvant être commandé par les signaux de commande du système de réglage automatique (22) électronique, de préférence par un moteur linéaire sous la forme d'une unité de réglage piézo-électrique pour augmenter ou diminuer la pression sur le fluide hydraulique qui se trouve dans la chambre hydraulique (4).

3. Système de freinage pouvant être commandé électroniquement pour des véhicules terrestres selon la revendication 2, caractérisé en ce que
- l'élément de déplacement est formé par une membrane (12') de préférence métallique qui peut être déformée et / ou déplacée par l'actionneur (14) en fonction des signaux de commande et augmente ou diminue ainsi la pression sur au moins une partie du fluide hydraulique qui se trouve dans la chambre hydraulique (4).

4. Système de freinage pouvant être commandé électroniquement pour des véhicules terrestres selon la revendication 2, caractérisé en ce que
- l'élément de déplacement est formé par un soufflet (12) de préférence métallique qui peut être déformé et / ou déplacé par l'actionneur (14) en fonction des signaux de commande et augmente ou diminue ainsi la pression sur le fluide hydraulique qui se trouve dans la chambre hydraulique (4).

5. Système de freinage pouvant être commandé électroniquement pour des véhicules terrestres selon la revendication 1, caractérisé en ce que
- la chambre hydraulique (4) est divisée par l'élément de déplacement (12) en une première et une deuxième zones (4a, 4b) qui sont reliées entre elles par le dispositif de vanne (23a, 23b) et dont une zone (4b) est isolée par une fermeture du dispositif de vanne (23a, 23b), la fermeture du dispositif de vanne (23a, 23b) étant provoquée de préférence par un actionnement de l'actionneur (14) dans le sens d'une augmentation de la pression régnant dans le fluide hydraulique par l'actionneur (14).

6. Système de freinage pouvant être commandé électroniquement pour des véhicules terrestres selon la revendication précédente, caractérisé en ce que
- lors d'un processus de freinage, le fluide hydraulique est refoulé dans la deuxième zone (4a) de la chambre hydraulique (4) par un maître cylindre de frein (2) pouvant être actionné par la pédale de frein (1).

7. Système de freinage pouvant être commandé électroniquement pour des véhicules terrestres selon la revendication 5, caractérisé en ce que
- la fermeture du dispositif de vanne (23a, 23b) est achevée lorsque l'actionneur (14) déforme et / ou déplace l'élément de déplacement (12) dans le sens d'une augmentation de la pression dans le fluide hydraulique.

8. Système de freinage pouvant être commandé électroniquement pour des véhicules terrestres selon la revendication 3, caractérisé en ce que
- la membrane (12') présente un bombement convexe (12'c), est tendue le long de sa périphérie dans le cylindre (6a) et fait face par son bombement convexe (12'c) à un élément d'actionnement (15) de l'actionneur (14).

9. Système de freinage pouvant être commandé électroniquement pour des véhicules terrestres selon l'une quelconque des revendications précédentes, caractérisé en ce que
- l'élément de déplacement (12) présente une ouverture (23a) qui forme avec un élément de fermeture (23b) relié à l'actionneur (15) le dispositif de vanne (23), l'élément de fermeture (23b) étant dimensionné et disposé par rapport à l'ouverture (23a) de telle façon que dans la position non actionnée de l'actionneur (14) il ne touche pas l'élément de déplacement (12, 12') et libère l'ouverture (23a) et dans la position actionnée de l'actionneur (14) il obture l'ouverture (23a) et déforme et / ou déplace l'élément de déplacement (12, 12') dans le sens d'une augmentation de la pression dans le fluide hydraulique dans la zone isolée (4b) de la chambre hydraulique (4).

10. Procédé de fonctionnement d'un système de freinage pouvant être commandé électroniquement pour des véhicules terrestres utilisant un système de freinage pouvant être commandé électroniquement selon l'une ou plusieurs des revendications 1 à 9 et selon lequel, pour un processus de freinage,
- la chambre hydraulique (4) du dispositif à cylindre et piston (6a, 6b) est alimentée en fluide hydraulique par un cylindre de frein (2) actionné par une pédale de frein (1) de telle façon que des forces de frottement (Fₐₖₜ) soient introduites dans l'élément de frottement (8) qui est accouplé à une roue de véhicule,
- au moyen d'un dispositif de réglage automatique (22) électronique et de capteurs (25, 27) reliés à celui-ci,
-- des paramètres du processus de freinage sont relevés,
-- des forces de frottement optimales (Fₒₚₜ) pour le processus de freinage sont déterminées à partir des paramètres du processus de freinage en cours,
-- les forces de frottement (Fₒₚₜ) déterminées comme étant optimales sont comparées aux forces de frottement introduites dans l'élément de frottement (8), et
-- des signaux de commande pour un actionneur (14) sont générés lorsqu'il ressort des paramètres relevés que les forces de frottement (Fₐₖₜ) introduites dans l'élément de frottement (8) diffèrent des forces de frottement (Fₒₚₜ) déterminées comme étant optimales,
--- l'actionneur (14) agissant sur un élément de déplacement (12) qui peut être déplacé pour augmenter ou diminuer la pression sur le fluide hydraulique qui se trouve dans la chambre hydraulique (4) pour augmenter respectivement diminuer les forces de frottement (Fₐₖₜ) introduites dans l'élément de frottement (8) de telle façon que les forces de frottement (Fₒₚₜ) déterminées comme étant optimales soient introduites dans l'élément de frottement (8).

11. Procédé de fonctionnement d'un système de freinage pouvant être commandé électroniquement pour des véhicules terrestres selon la revendication précédente, caractérisé en ce que
- les paramètres relevés contiennent une ou plusieurs des grandeurs suivantes : les forces de frottement (Fₐₖₜ) introduites dans l'élément de frottement (8), la force d'actionnement de la pédale de frein, la course d'actionnement de la pédale de frein, la vitesse d'actionnement de la pédale de frein, la vitesse d'une roue du véhicule, la décélération d'une roue du véhicule, la pression dans la chambre hydraulique, la tension appliquée à l'actionneur et / ou le courant circulant dans l'actionneur (14).

12. Procédé de fonctionnement d'un système de freinage pouvant être commandé électroniquement pour des véhicules terrestres selon la revendication précédente, caractérisé en ce que
- les forces de frottement (Fₒₚₜ) déterminées comme étant optimales pour un processus de freinage sont formées par une suite de valeurs de forces de frottement d'amplitudes différentes de même durée ou de durées différentes.

13. Procédé de fonctionnement d'un système de freinage pouvant être commandé électroniquement pour des véhicules terrestres selon l'une quelconque des revendications 1 à 12, caractérisé en ce que
- au moins une partie du fluide qui se trouve dans la chambre hydraulique est isolé par un dispositif de vanne (23) coupant d'un / mettant en communication avec un cylindre de frein avant que l'actionneur (14) déforme et / ou déplace l'élément de déplacement (12) dans le sens d'une augmentation de la pression qui règne dans le fluide hydraulique dans la zone isolée.
